# EUROPÄISCHE PATENTANMELDUNG

(11) **EP 0 794 358 A2**
(43) Veröffentlichungstag der Anmeldung: **10.09.1997**
(21) Anmeldenummer: 96119906.4
(22) Anmeldetag: 12.12.1996
(51) Int. Cl.: F16H 25/20, F16H 1/08, A47C 20/04

(54) **Elektromotorischer Möbelantrieb**

(30) Priorität: 08.03.1996 DE 29604293 U
(71) Anmelder: Dewert Antriebs- und Systemtechnik GmbH & Co. KG, D-32278 Kirchlengern (DE)
(72) Erfinder: Schneider, Johannes, 32278 Kirchlengern, St. Quernheim (DE)
(74) Vertreter: Stracke, Alexander, Dipl.-Ing.

(57) **Zusammenfassung**

Kompakter elektromotorischer Möbelantrieb mit mindestens einem Antriebsmotor (13) der eine Stellspindel (20) mit Spindelmutter (22) antreibt. Der Antriebsmotor (13) ist parallel zur Stellspindel (20) angeordnet und treibt diese über ein selbsthemmendes Getriebe mit zwei Schraubradpaaren (14,15 bzw. 16,17) an. Die Schraubräder des Getriebes sind auf jeder Welle paarweise mit gegensinniger Schrägung ausgeführt, so daß sich ihre Axialkräft aufheben.

Der Möbelantrieb ist insbesondere für Lattenroste geeignet.

## Beschreibung

Die vorliegende Erfindung betrifft einen elektromotorischen Möbelantrieb mit mindestens einem Antriebsgetriebemotor und einer mit jedem Antriebsgetriebemotor antriebstechnisch gekoppelten Getriebeanordnung, dessen Ausgangsglied mit einer rotierend antreibbaren Stellspindel in einer Antriebsverbindung steht, auf die eine in Längsrichtung der Stellspindel verfahrbare Spindelmutter aufgesetzt ist.

Der in Frage kommende elektromotorische Möbelantrieb kann als Einzelantrieb mit einem Antriebsgetriebemotor und einer Stellspindel oder als Doppelantrieb mit zwei Antriebsgetriebemotoren und zwei Stellspindeln ausgebildet sein. Die zwischen dem Antriebsgetriebemotor und der Stellspindel zwischengeschaltete Getriebeanordnung ist bei den bislang bekannten elektromotorischen Möbelantrieben als Schneckentrieb ausgebildet. Dabei ist die Schnecke zur Reduzierung der relativ hohen Drehzahl des Antriebsgetriebemotors auf den Abtriebszapfen des Antriebsgetriebemotors und das Schneckenrad auf einer dazu im rechten Winkel stehenden Welle aufgesetzt. Diese Welle ist mit der Stellspindel gekoppelt. Bei dem in Frage kommenden elektromotorischen Möbelantrieb handelt es sich um einen Kleinstantrieb mit einer Leistung von einigen 100 Watt. Die Drehzahl der Stellspindel muß relativ gering sein, damit das damit gekoppelte, zu verstellende Möbelbauteil entsprechend langsam verstellt wird. Möbelantriebe werden beispielsweise zum Verstellen der schwenkbaren Teile eines Lattenrostes für Kranken- und Pflegebetten, für Behandlungsstühle, Fernsehsessel und ähnliche Möbel verwendet. Dabei sind die vorhandenen Einbauräume relativ klein, so daß für diese Möbelantriebe eine kompakte Ausführung notwendig ist.

Die bislang bekannten Möbelantriebe sind zwar schon in einer Kompaktbauweise ausgeführt, doch sind sie für verschiedene Einsatzfälle noch zu voluminös. Es wird ferner angestrebt, daß die aufgenommene Leistung möglichst gering ist, um den Energiebedarf zu reduzieren. Für die Funktion des Möbelantriebes ist es jedoch erforderlich, daß die Getriebeanordnung selbsthemmend ist. Der Wirkungsgrad der bisher bekannten, selbsthemmenden Getriebeanordnungen liegt im Bereich von ca. 0,5. Der Energieverlust ist dementsprechend hoch.

Der vorliegenden Erfindung liegt die Aufgabe zugrunde, einen elektromotorischen Möbelantrieb der eingangs näher beschriebenen Art in konstruktiv einfacher Weise so auszubilden, daß die äußeren Abmessungen gegenüber den bisher bekannten Ausführungen verringert werden, und daß außerdem die Leistungsaufnahme herabgesetzt werden kann, und daß die Selbsthemmung beibehalten wird, wobei trotzdem ein wesentlich höherer Wirkungsgrad erzielt wird.

Die gestellte Aufgabe wird gelöst, indem die Drehachse des Rotors des jeweiligen Antriebsgetriebemotors parallel und im Abstand zur Drehachse der zugehörigen Stellspindel steht, und daß die Getriebeanordnung wenigstens ein miteinander kämmendes, die Drehzahl des Antriebsgetriebemotors herabsetzendes Schraubenräderpaar aufweist.

Die äußeren Abmessungen des erfindungsgemäßen Möbelantriebes sind gegenüber den bekannten Ausführungen deutlich verringert, da die rechtwinklig zueinander stehenden Achsen nunmehr entfallen. Die Parallelität der Stellspindel zur Drehachse des Rotors ließe sich auch durch eine entsprechende, anders gestaltete Getriebeanordnung erreichen, beispielsweise durch ein mehrstufiges Stirnradgetriebe, durch ein Planetenradgetriebe, durch ein Kegelradgetriebe oder ähnliche Getriebe. Durch die Mehrstufigkeit läßt sich jedoch nicht die gewünschte, kompakte Bauform erreichen. Außerdem sind Stirnradgetriebe in allen Ausführungen nicht selbsthemmend, so daß sie für Möbelantriebe nicht in Frage kommen. Außerdem verschlechtert sich durch die Mehrstufigkeit der Gesamtwirkungsgrad noch deutlich. Schraubenradgetriebe sind allerdings bereits bekannt, jedoch in dieser konstruktiven Ausführung und Applikation neu. Sie werden jedoch nicht als Antriebsmittel für Maschinen und Geräte verwendet, deren Leistungen deutlich über denen von Möbelantrieben liegen. Das bisherige Einsatzgebiet beschränkt sich überwiegend auf von Hand betätigbare Stelltriebe und dergleichen. Da die Leistung eines elektromotorischen Möbelantriebes gegenüber ansonsten im Maschinenbau verwendeten Antrieben äußerst gering ist, kann für diese Leistungen ohne weiteres ein Schraubenradgetriebe verwendet werden. Dies bietet nicht nur den Vorteil der notwendigen Herabsetzung der Drehzahl des Antriebsgetriebemotors sondern auch noch die Parallelität zwischen der Drehachse des Rotors und der Stellspindel. Darüber hinaus liegt der Wirkungsgrad deutlich über den von Schneckengetrieben, beispielsweise im Bereich von ca. 0,8 bis 0,9 und ist konstruktiv so ausgelegt, daß es trotzdem selbsthemmend ist, so daß die Leistungsaufnahme entsprechend herabgesetzt werden kann. Bei anderen Antrieben mit parallelen Achsen bzw. Wellen ist es notwendig, eine Bremse zu installieren, die durch die Verwendung des Schraubenradgetriebes entfallen kann. In besonders vorteilhafter Weise hat das Schraubenräderpaar eine Selbsthemmung von hohem Wirkungsgrad mit sich gegenseitig aufhebenden Axialkräften.

Gemäß einem bevorzugten Ausführungsbeispiel ist vorgesehen, daß die Getriebeanordnung zwei Paare von miteinander kämmenden Schraubenstirnrädern aufweist, daß die Nenndurchmesser der Schraubenstirnräder beider Paare unterschiedlich derart sind, daß das jeweils ausgangsseitige Rad den größeren Durchmesser aufweist. Das ausgangsseitige Rad ist immer das in der Kraftübertragungsrichtung hintere Rad. Bei der Anordnung mit zwei Schraubenstirnrädern heben sich in vorteilhafter Weise die Axialkräfte auf, weil u. a. der Gehäuseaufbau vereinfacht werden kann.

Eine konstruktiv einfache Lösung für diese Ausführung ergibt sich, wenn auf dem Abtriebszapfen des Antriebsgetriebemotors ein erstes Schraubenstirnrad eines ersten Schraubenstirnradpaares drehfest aufgesetzt ist, daß die Getriebeanordnung eine Zwischenwelle beinhaltet, auf die ein mit dem ersten Schraubenstirnrad des ersten Schraubenstirnradpaares kämmendes, ausgangsseitiges Schraubenstirnrad größeren Durchmessers und ein eingangsseitiges Schraubenstirnrad mit kleinerem Durchmesser aufgesetzt ist, welches mit dem ausgangsseitigen Schraubenstirnrad mit größerem Durchmesser des zweiten Schraubenstirnradpaares kämmt.

Gemäß einer anderen Ausführungsform, die bedingt durch die zu erreichende Selbsthemmung, Drehzahl und das erforderliche Übersetzungsverhältnis ist, ist vorgesehen, daß die Getriebeanordnung aus einem Paar von Schraubenstirnrädern und einem Paar von gerad- oder schrägverzahnten Stirnrädern besteht, wobei vorzugsweise schrägverzahnte Stirnräder mit profilverschobener Minimalzähnezahl zur Erlangung eines minimalen Achsabstandes und eines größtmöglichen Übersetzungsverhältnisses zum Einsatz kommen. Diese Ausführung ist konstruktiv einfach, da Stirnräder mit einer Gerad- oder Schrägverzahnung sinngemäß handelsübliche Bauteile sind. Dabei ist es dann zweckmäßig, wenn das aus den gerad- oder schrägverzahnten Stirnrädern gebildete Paar, in Übertragungsrichtung gesehen, dem aus den Schraubenstirnrädern gebildeten Paar vorgeschaltet ist. Die Lage des Antriebsgetriebemotors zur Stellspindel kann sich nach den Einbauverhältnissen richten. So ist vorgesehen, daß der Antriebsgetriebemotor seitlich neben der Stellspindel oder auf der gegenüberliegenden Seite des Gehäuses des elektromotorischen Möbelantriebes angeordnet ist.

Anhand der beiliegenden Zeichnungen wird die Erfindung noch näher erläutert.

Es zeigen:
- Figur 1: Einen erfindungsgemäßen Möbelantrieb mit einer aus zwei Schraubenstirnräderpaaren gebildeten Getriebeanordnung im Schnitt,
- Figur 2: eine der Fig. 1 entsprechende Darstellung, bei der jedoch die Getriebeanordnung aus einem Paar von Schraubenstirnrädern und einem Paar von Stirnrädern gebildet ist,
- Figur 3: eine der Fig. 1 entsprechende Ansicht, jedoch mit einer anderen Aufhängung des Möbelantriebes und
- Figur 4: eine weitere Möglichkeit der Anordnung des Antriebsgetriebemotors zur Stellspindel.

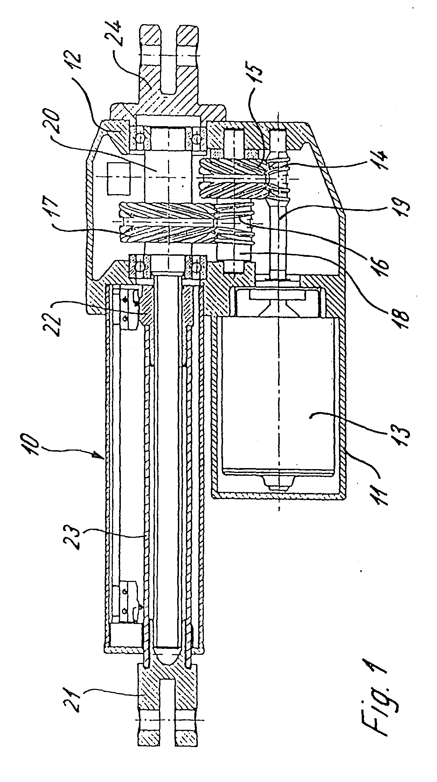

Der in den Figuren dargestellte elektromotorische Möbelantrieb 10 umfaßt ein mehrteiliges Gehäuse, welches aus einem Motorgehäuse 11 und einem Hauptgehäuse 12 besteht. In dem Motorgehäuse 11 ist ein nicht näher erläuterter Antriebsgetriebemotor 13 eingesetzt. In dem Hauptgehäuse 12 ist eine noch näher erläuterte Getriebeanordnung gelagert. Diese Getriebeanordnung besteht bei der Ausführung nach der Fig. 1 aus zwei Paaren von Schraubenstirnrädern 14, 15, 16, 17. Ferner ist in dem Hauptgehäuse 12 eine Zwischenwelle 18 frei drehbar gelagert. Auf den Antriebszapfen 19 des Antriebsgetriebemotors 13 ist das im Durchmesser recht kleine Schraubenstirnrad 14 drehfest aufgesetzt. Dieses Schraubenstirnrad 14 steht mit einem weiteren Schraubenstirnrad 15 größeren Durchmessers im Eingriff, welches auf der Zwischenwelle 18 drehfest aufgesetzt ist. Seitlich neben dem Schraubenstirnrad 15 ist ein weiteres Schraubenstirnrad 16 mit einem gegenüber dem Schraubenstirnrad 15 kleineren Durchmesser drehfest aufgesetzt. Dieses Schraubenstirnrad 16 steht mit einem weiteren Schraubenstirnrad 17 in Eingriff, welches auf ein gewindefreies Ende einer Stellspindel 20 drehfest gelagert ist. Dadurch wird eine zweistufige Getriebeanordnung geschaffen, wobei die Schraubenstirnräder 14 und 15 sowie 16 und 17 die beiden Paare bilden.

Es ergibt sich aus der Fig. 1, daß durch diese Getriebeanordnung die Drehzahl des Antriebsgetriebemotors 13 deutlich herabgesetzt wird. Die Stellspindel 20 ist im Hauptgehäuse 12 drehbar gelagert. Das dem Schraubenstirnrad 17 abgewandt liegende Ende ist mit einem Gewinde versehen. Auf die Stellspindel ist eine Spindelmutter 22 aufgedreht, die gegen Drehung gesichert ist und sich bei Drehung der Stellspindel 20 linear bewegt. Die Spindelmutter 22 steht mit einem Hubrohr 23 in Verbindung, welches der Bewegung der Spindelmutter 22 folgt. Ein Gabelkopf 21 ist auf das freie, der Getriebeanordnung abgewandt liegende Ende des Hubrohres 23 aufgesetzt. Zur Halterung des elektromotorischen Möbelantriebes 10 ist das Hauptgehäuse 12 an der dem Gabelkopf 21 gegenüberliegenden Stirnfläche noch mit einem weiteren Gabelkopf 24 ausgerüstet.

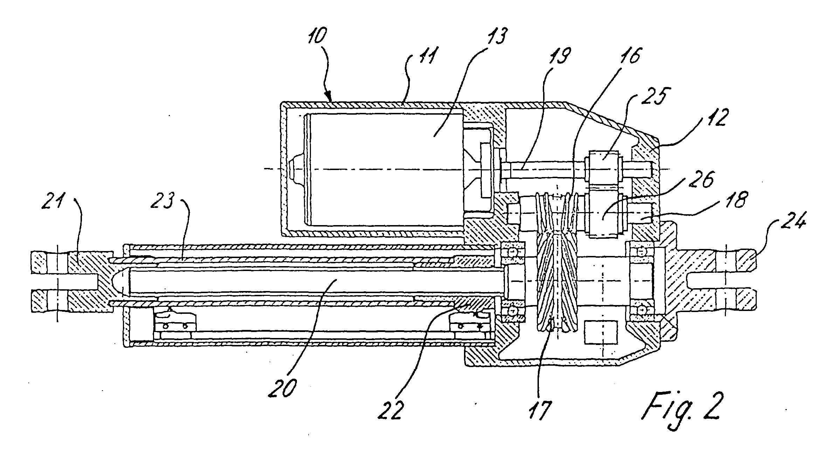

Bei der Ausführung nach der Fig. 2 liegt der Antriebsgetriebemotor 13 seitlich neben der Stellspindel 20. Die Drehachse des Rotors des Antriebsgetriebemotors 13 verläuft demzufolge parallel und im Abstand zur Mittellängsachse der Stellspindel 20.

Bei der Ausführung nach der Fig. 2 ist das Motorgehäuse 11 in einer spiegelbildlichen Lage zur Ausführung nach der Fig. 1 gezeichnet, um zu verdeutlichen, daß auch diese Einbaulage möglich ist. Ansonsten unterscheidet sich diese Ausführung durch die Getriebeanordnung, die in diesem Falle aus einem Paar von Stirnrädern 25, 26 und einem Paar von Schraubenstirnrädern 16, 17 besteht. Das kleinere Stirnrad 25 ist auf den Abtriebszapfen 19 fest aufgesetzt und steht mit einem auf die Zwischenwelle 18 aufgekeilten Stirnrad 26 größeren Durchmessers in Eingriff. Demzufolge liegt bei der gezeichneten Ausführung das auf den Stirnrädern 25, 26 gebildete Paar vor dem aus den Schraubenstirnrädern 16, 17 gebildeten Paar. Die Umkehrung ist jedoch ebenfalls möglich.

Die Schraubenstirnräder 14, 15, 16, 17 sind als Doppelschraubenstirnräder ausgebildet mit einer mittigen Radialnut. Die seitlich dieser Radialnut liegenden Zähne sind gegensinnig schräg angeordnet, bzw. sind pfeilförmig zueinander angeordnet. Dadurch wird eine laufruhige, jedoch relativ hoch belastbare Getriebeanordnung geschaffen, wobei sich die entstehenden Axialkräfte aufheben.

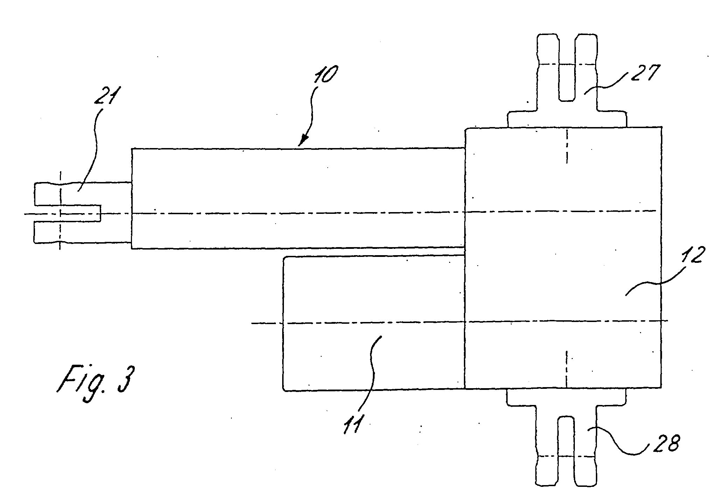

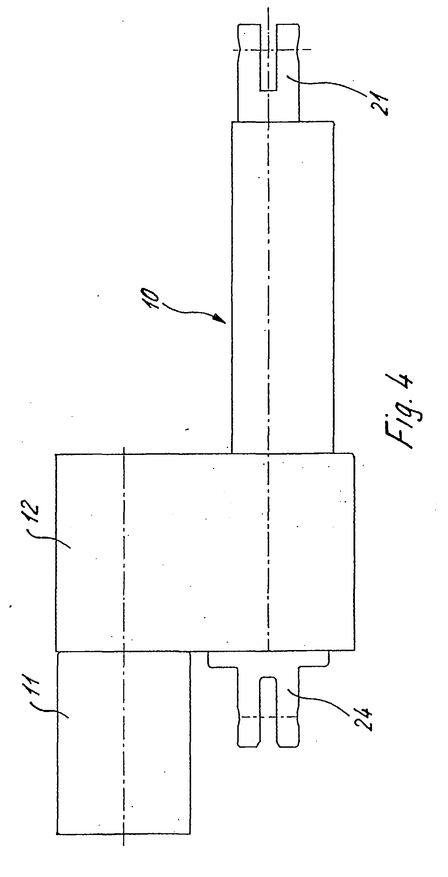

In den Fig. 3 und 4 sind beispielhaft zwei verschiedene Möglichkeiten der Lage des Motorgehäuses 11 zu der Stellspindel 20 dargestellt. Bei der Ausführung nach der Fig. 3 liegt der Antriebsgetriebemotor 13 wiederum seitlich neben der Stellspindel 20 entsprechend den Fig. 1 und 2. An den beiden parallel und im Abstand zur Stellspindel 20 stehenden Außenflächen des Hauptgehäuses 12 ist jeweils ein weiterer Gabelkopf 27, 28 angesetzt. Die Gabelköpfe 27, 28 stehen demzufolge quer zum Gabelkopf 21. Auch die spiegelbildliche Anordnung, bzw. die um 180 Grad gedrehte Anordnung ist denkbar.

Bei der Ausführung nach der Fig. 4 ist der elektromotorische Möbelantrieb 10 entsprechend den Ausführungen gemäß den Fig. 1 und 2 mit zweieinander gegenüberliegenden Gabelköpfen 21 und 24 ausgerüstet. Gegenüber der Ausführung nach der Fig. 3 unterscheidet sich diese dadurch, daß das Motorgehäuse 11 an der der Stellspindel 20 abgewandten Stirnfläche des Hauptgehäuses 12 angeflanscht ist. Auch bei dieser Ausführung steht die Drehachse des Rotors des Antriebsgetriebemotors 13 parallel und im Abstand zur Mittellängsachse der Stellspindel 20, obwohl ein Versatz in Längsrichtung gegeben ist. Die jeweilige Lage des Motorgehäuses 11 zur Stellspindel 20 kann entsprechend den Einbauverhältnissen und Einsatzzwecken gewählt werden. Wesentlich ist immer der Versatz der Mittellängsachse der Stellspindel 20 zur Drehachse des Rotors des Antriebsgetriebemotors 13.

## Patentansprüche

1. Elektromotorischer Möbelantrieb mit mindestens einem Antriebsgetriebemotor und einer mit jedem Antriebsgetriebemotor antriebstechnisch gekoppelten Getriebeanordnung, dessen Ausgangsglied mit einer rotierend antreibbaren Stellspindel in einer Antriebsverbindung steht, auf die eine in Längsrichtung der Stellspindel verfahrbare Spindelmutter aufgesetzt ist, **dadurch gekennzeichnet, daß** die Drehachse des Rotors des jeweiligen Antriebsgetriebemotors (13) parallel und im Abstand zur Drehachse der zugehörigen Stellspindel (20) steht, und daß die Getriebeanordnung wenigstens ein miteinander kämmendes, die Drehzahl des Antriebsgetriebemotors (13) herabsetzendes Schraubenräderpaar (14, 15 bzw. 16, 17) aufweist.

2. Elektromotorischer Möbelantrieb nach Anspruch 1, **dadurch gekennzeichnet, daß** das Schraubenräderpaar eine Selbsthemmung von hohem Wirkungsgrad sowie sich gegenseitig aufhebende Axialkräfte aufweist.

3. Elektromotorischer Möbelantrieb nach Anspruch 1 und 2, **dadurch gekennzeichnet, daß** die Getriebeanordnung zwei Paare von miteinander kämmenden Schraubenstirnrädern (14, 15 u. 16, 17) aufweist, daß die Nenndurchmesser der Schraubenstirnräder (14, 15, 16, 17) beider Paare unterschiedlich sind, derart, daß das jeweils ausgangsseitige Schraubenstirnrad (15, 17) im Durchmesser gegenüber den eingangsseitigen Schraubenstirnrädern (14, 16) größer ist.

4. Elektromotorischer Möbelantrieb nach Anspruch 3, **dadurch gekennzeichnet, daß** auf den Abtriebszapfen (19) des Antriebsgetriebemotors (13) ein erstes Schraubenstirnrad (14) eines ersten Schraubenstirnradpaares (14, 15) drehfest aufgesetzt ist, daß die Getriebeanordnung eine Zwischenwelle (18) beinhaltet, auf die ein ausgangsseitiges, mit dem ersten Schraubenstirnrad kämmendes Schraubenstirnrad (15) größeren Durchmessers und ein eingangsseitiges Schraubenstirnrad (16) mit kleinerem Durchmesser aufgesetzt ist, welches mit dem ausgangsseitigen Schraubenstirnrad (18) mit größerem Durchmesser des zweiten Schraubenstirnradpaares kämmt.

5. Elektromotorischer Möbelantrieb nach Anspruch 1, **dadurch gekennzeichnet, daß** die Getriebeanordnung aus einem Paar von Schraubenstirnrädern (16, 17) und einem Paar von gerad- oder schrägverzahnten Stirnrädern (25, 26) besteht.

6. Elektromotorischer Möbelantrieb nach Anspruch 1, 2 und 5, **dadurch gekennzeichnet, daß** das Paar gerad- oder schrägverzahnter Stirnräder (25, 26) aus profilverschobenen gerad- oder schrägverzahnten Stirnrädern mit Minimalzähnezahl besteht.

7. Elektromotorischer Möbelantrieb nach Anspruch 5 und/oder 6, **dadurch gekennzeichnet, daß** das aus den Stirnrädern (25, 26) gebildete Paar, in Übertragungsrichtung gesehen, dem aus den Schraubenstirnrädern (16, 17) gebildeten Paar vorgeschaltet ist.

8. Elektromotorischer Möbelantrieb nach einem oder mehreren der vorhergehenden Ansprüche 1 bis 7, **dadurch gekennzeichnet, daß** die Schraubenstirnräder (14, 15, 16, 17) der Getriebeanordnung als Doppelschraubenstirnräder ausgebildet sind, daß jedes Schraubenstirnrad (14, 15, 16, 17) eine umlaufende Radialnut aufweist, daß beidseitig dieser Radialnut die Zähne gegensinnig angeordnet sind.

9. Elektromotorischer Möbelantrieb nach einem oder mehreren der vorhergehenden Ansprüche 1 bis 8, **dadurch gekennzeichnet, daß** die Schraubenstirnräder (14, 15, 16, 17) die sich ergebenden Axialkräfte aufheben und eine Selbsthemmung mit hohem Wirkungsgrad aufweisen.

10. Elektromotorischer Möbelantrieb nach einem oder mehreren der vorhergehenden Ansprüche 1 bis 9, **dadurch gekennzeichnet, daß** der Antriebsgetriebemotor (13) seitlich neben der Stellspindel (20) oder auf der gegenüberliegenden Seite des Hauptgehäuses (12) des elektromotorischen Möbelantriebes (10) angeordnet ist.
